# EUROPEAN PATENT APPLICATION

(11) **EP 4 772 327 A1**
(43) Date of publication of application: **08.07.2026**
(21) Application number: 25225506.2
(22) Date of filing: 19.12.2025
(51) Int. Cl.: B29C 45/76, B29C 45/36

(54) **INJECTION MOLDING MACHINE, INFORMATION PROCESSING METHOD AND COMPUTER PROGRAM**

(30) Priority: 07.01.2025 JP 2025002372
(71) Applicant: The Japan Steel Works, Ltd., Tokyo 141-0032 (JP)
(72) Inventor: YOKOTA, Takumi, Tokyo, 1410032 (JP)
(74) Representative: Simmons & Simmons LLP (Munich)

(57) **Abstract**

The present disclosure is to provide an injection molding machine and the like that allows the user to easily grasp interlock information related to cores.

An injection molding machine (1), includes: an injection device (3) melting and injecting an injection material; a mold clamping device (4) clamping a metal mold (41) with a core (47) that is injected with the injection material; a control device (2) controlling an action of the core (47); and a display unit (24) displaying an action status of the core (47), and the display unit (24) includes a core action icon (71) indicative of an action of the core (47), and a first information icon (74) indicative of interlock information concerning the core (47), and the core action icon (71) and the first information icon (74) are displayed in association with each other.

## Description

### Technical Field

The present invention relates to an injection molding machine, an information processing method and a computer program.

### Background Art

Injection molding machines have been known that melt a material for molding and injects the molten material into a metal mold to manufacture a molded product. Patent Literature 1 discloses an injection molding machine having a metal mold with a core.

### Citation List

### Patent Literature

Patent Literature 1: Japanese Patent Application Laid-Open Publication No. 2010-120391

### Summary of Invention

### Technical Problems

In the injection molding machine with a core, an interlock for an action of the core is set to prevent breakage of a metal mold, a defective molded product and the like. A technique that allows the user to easily grasp interlock information related to a core has been desired.

The present disclosure is to provide an injection molding machine and the like that allows the user to easily grasp interlock information related to a core. Solution to Problems

An injection molding machine according to one aspect of the present disclosure, include: an injection device melting and injecting an injection material; a mold clamping device clamping a metal mold with a core that is injected with the injection material; a control device controlling an action of the core; and a display unit displaying an action status of the core, and the display unit includes a core action icon indicative of an action of the core, and a first information icon indicative of interlock information concerning the core, and the core action icon and the first information icon are displayed in association with each other.

An information processing method according to one aspect of the present disclosure is an information processing method related to an injection molding machine, the injection molding machine include: an injection device melting and injecting an injection material; a mold clamping device clamping a metal mold with a core that is injected with the injection material; and a display unit displaying an action status of the core, and the method includes displaying, on the display unit, a core action icon indicative of an action of the core and a first information icon indicative of interlock information concerning the core in association with each other.

A computer program according to one aspect of the present disclosure is a computer program causing a computer to execute processing related to an injection molding machine, the injection molding machine includes an injection device melting and injecting an injection material, a mold clamping device clamping a metal mold with a core that is injected with the injection material, and a display unit displaying an action status of the core, and the computer program causes the computer to execute processing of displaying, on the display unit, a core action icon indicative of an action of the core and a first information icon indicative of interlock information concerning the core in association with each other.

### Advantageous Effects of Invention

According to the present disclosure, interlock information related to a core can easily be grasped.

### Brief Description of Drawings

FIG. 1 is a view illustrating an example of the configuration of an injection molding machine according to the present embodiment.
FIG. 2 is a block diagram illustrating an example of the configuration of a control device.
FIG. 3 is a schematic diagram illustrating an example of a display screen.
FIG. 4 is a schematic diagram illustrating an example of a setting screen when an operation on a core action icon is received.
FIG. 5 is a schematic diagram illustrating an example of a details setting screen when a detailed setting of the action of a core is received.
FIG. 6 is a schematic diagram illustrating another example of the setting screen.
FIG. 7 is a schematic diagram illustrating an example of an interlock condition setting screen.
FIG. 8 is a schematic diagram illustrating an example of a general screen.
FIG. 9 is a schematic diagram illustrating an example of an interlock details screen.
FIG. 10 is a schematic diagram illustrating an example of a manual operation screen.
FIG. 11 is a flowchart illustrating one example of a processing procedure related to the setting screen.
FIG. 12 is a flowchart illustrating one example of a processing procedure related to the general screen.

### Description of Embodiments

The invention will be specifically described with reference to the drawings illustrating an embodiment thereof.

### <Injection Molding Machine 1>

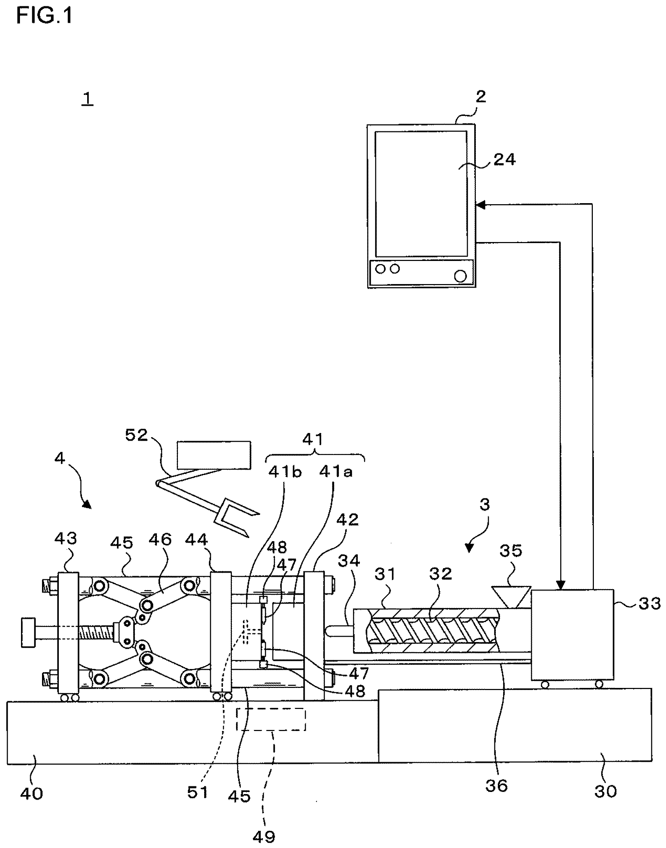

FIG. 1 is a view illustrating an example of the configuration of an injection molding machine 1 according to the present embodiment. The injection molding machine 1 includes a control device 2, an injection device 3, a mold clamping device 4, an ejector device 51 and a takeout device 52.

### <Control Device 2>

The control device 2 is a computer for controlling the operation of the injection molding machine 1. The control device 2 is further provided with a display unit 24 and presents various information related to actions of the injection molding machine 1 via the display unit 24.

### <Injection Device 3>

The injection device 3 is a device for melting and injecting a resin material (injection raw material). The injection device 3 is situated on a base 30. The injection device 3 includes a heating cylinder 31, a screw 32 rotatably provided inside the heating cylinder 31 and a drive device 33 for driving the screw 32. The heating cylinder 31 is provided with a nozzle 34 at the leading edge thereof and a hopper 35 through which a resin material (injection raw material) is input near the rear edge of the heating cylinder 31. Inside or at the outer circumference of the heating cylinder 31, a heater (not illustrated) for melting a resin material is provided.

The drive device 33, which contains a servo motor for injection, a ball screw and the like, drives the screw 32 in a rotational direction and in an axial direction. When a resin material is input from the hopper 35 and melted by rotating the screw 32, the resin material is measured at the leading edge of the screw 32. When the screw 32 is driven in the axial direction, the resin material is injected.

The injection molding machine 1 is further provided with a nozzle touch device 36 that moves the injection device 3 in the front-back direction (left-right direction in FIG. 1). When the nozzle touch device 36 is driven, the injection device 3 is configured to move forward so that the nozzle 34 of the heating cylinder 31 touches a contact portion of a fixed platen 42 to be described later. When the nozzle 34 touches the contact portion of the fixed platen 42, the resin material melted into the internal space of a metal mold 41 is injected from the nozzle 34 through a gate at the contact portion of the fixed platen 42.

### <Mold Clamping Device 4>

The mold clamping device 4 is a device for clamping the metal mold 41. The mold clamping device 4 is provided with the metal mold 41, the fixed platen 42 fixed on a bed 40, a mold clamping housing 43 slidably provided over the bed 40 and a movable platen 44 that similarly slides over the bed 40. The fixed platen 42 and the mold clamping housing 43 are coupled with multiple, for example, four tie-bars 45. The movable platen 44 is configured to be slidable between the fixed platen 42 and the mold clamping housing 43. Between the mold clamping housing 43 and the movable platen 44, a mold clamping mechanism 46 is provided.

The metal mold 41 includes a fixed mold 41a and a movable mold 41b. The fixed platen 42 is attached with the fixed mold 41a while the movable platen 44 is attached with the movable mold 41b. The movable mold 41b with the movable platen 44 approaches the fixed mold 41a and combined along with the fixed mold 41a. The movable mold 41b is combined with the fixed mold 41a to form an internal space conforming to the shape of a molded product, i.e., a cavity, between the movable mold 41b and the fixed mold 41a.

The mold clamping mechanism 46 is provided with a toggle mechanism, an electric motor or the like, and moves the movable platen 44 in a direction toward or away from the fixed platen 42. Driving of the mold clamping mechanism 46 moves the movable mold 41b in a direction toward the fixed mold 41a to perform a mold closing action to close the metal mold 41. The movable mold 41b is pressed against the fixed mold 41a, to perform a mold clamping action to clamp the metal mold 41. The movable mold 41b moves in the direction away from the fixed mold 41a to perform a mold opening action to open the metal mold 41.

The metal mold 41 has multiple cores 47. Each of the cores 47 is a metal mold that is fit in the metal mold 41. The core 47 is used to form the inner surface of a molded product with a cavity, for example. The core 47 may be used to extrude a molded product from the metal mold 41. The position, shape, number and the like of the cores 47 provided in the metal mold 41 can appropriately be set depending on the shape and the like of a molded product. The number of cores 47 in the metal mold 41 may be one.

The core 47 is driven by a core drive device 48. The core drive device 48 may be provided with a hydraulic valve, a hydraulic cylinder or the like and can individually drive the core 47. The core 47 is driven by the core drive device 48 to undergo an installation action of the core 47 being inserted into the internal space of the metal mold 41 and a pulling action of the core 47 being taken out of the internal space of the metal mold 41.

The mold clamping device 4 is further provided with a temperature adjustment mechanism 49 for adjusting the temperature of the metal mold 41. The temperature adjustment mechanism 49 can cool or heat the metal mold 41 to a predetermined temperature by, for example, supplying the metal mold 41 with a cooling medium, a heating medium or the like.

### <Ejector Device 51>

The ejector device 51 is used to remove a molded product from the metal mold 41. The ejector device 51 is provided with, for example, an ejector pin disposed at a predetermined position of the internal space of the metal mold 41 and a drive motor for driving the ejector pin. The drive motor pushes forward, that is, advances the ejector pin to extrude a molded product out of the metal mold 41. After removal of the molded product, the drive motor retracts, that is, retreats the ejector pin.

### <Takeout Device 52>

The takeout device 52 is used to take out a molded product from the injection molding machine 1. The takeout device 52, which is provided with a robotic arm for grasping and conveying a molded product, for example, takes out a molded product removed from the metal mold 41 and moves the product to a predetermined position.

The injection molding machine 1 illustrated in FIG. 1 is an example, and the configuration of the injection molding machine 1 is not particularly limited. The injection molding machine 1 may be provided with one or more sensors that detect physical quantities indicative of the conditions of the injection molding machine 1.

### <Configuration of Control Device 2>

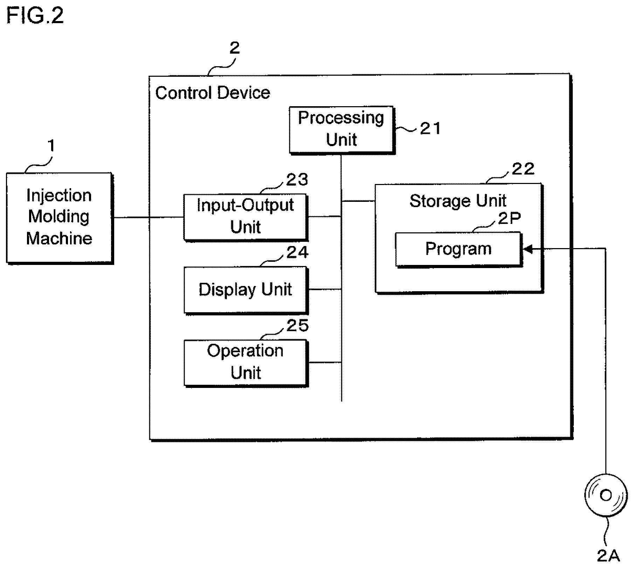

FIG. 2 is a block diagram illustrating an example of the configuration of the control device 2. The control device 2 is connected to the injection molding machine 1 in a wired or wireless manner. The control device 2 is provided with a processing unit 21, a storage unit 22, an input-output unit 23, a display unit 24 and an operation unit 25.

The processing unit 21 is provided with a processor such as one or more CPUs (Central Processing Units), one or more MPUs (Micro-Processing Units) or the like. The processing unit 21 contains a memory, which is a temporary storage medium, such as an SRAM (Static Random Access Memory) and a DRAM (Dynamic Random Access Memory). The processing unit 21 may have functions such as a timer to measure the elapsed time from when a measurement start instruction is given to when a measurement end instruction is given, a counter to count the number and a clock to output date and time information. The processing unit 21 may be implemented in software, may be partially or entirely implemented in hardware such as ASIC (Application Specific Integrated Circuit), FPGA (Field Programmable Gate Array) or the like.

The storage unit 22 is provided with a nonvolatile storage device such as a hard disk or a flash memory, for example. The storage unit 22 may be provided separately from the control device 2 and may be one or more externally-connected external storage devices. The storage unit 22 stores various computer programs and data to be referred to by the processing unit 21. The storage unit 22 of the present embodiment stores a program for causing the computer to execute processing of displaying the action status of the core 47 and receiving settings of the action of the core 47, for example.

A computer program (program product) including a program 2P may be provided in a non-transitory storage medium 2A readably recording the computer program. The storage unit 22 stores the computer program read from the recording medium 2A by a read-out device (not illustrated). The recording medium 2A is, for example, a magnetic disk, an optical disk, a semiconductor memory or the like. In addition, the above-mentioned computer programs may be provided by communication. The program 2P may be constructed by a single computer program or multiple computer programs. The program 2P may be executed on a single computer or may coordinately be executed by multiple computers.

The input-output unit 23 is provided with an input interface for receiving data input from the injection molding machine 1 and an output interface for outputting data to the injection molding machine 1. The input-output unit 23 is connected to, for example, the drive device 33, the nozzle touch device 36, the mold clamping mechanism 46, the core drive device 48, the ejector device 51, the takeout device 52 and sensors and the like. The processing unit 21 can output control signals for controlling the components via the input-output unit 23. The processing unit 21 can obtain sensor values indicating the states of the components in the injection molding machine 1 via the input-output unit 23.

The display unit 24 has a display device, for example, a liquid crystal display, an organic EL (Electro Luminescence) display or the like. The display unit 24 displays various information related to the action of the core 47 according to instructions from the processing unit 21.

The operation unit 25 is an interface that receives operations by the user. The operation unit 25 includes, for example, a touch panel device with a built-in display, a mouse, a keyboard, a selector switch, a push-button switch, a speaker, a microphone and the like. The operation unit 25 receives an operation input from the user and sends a control signal according to the operation content to the processing unit 21. In the present embodiment, at least part of the display unit 24 and the operation unit 25 are integrated to form a touch panel by way of example.

Note that the display unit 24 may be provided separately from the control device 2. The control device 2 and the display unit 24 may be located away from the injection device 3 and the mold clamping device 4 and may communicatively be connected with them through a communication network such as the Internet, LAN (Local Ares Network) or the like to send and receive various signals to and from the injection device 3, the mold clamping device 4 and the like via the communication network.

### <Action of Injection Molding Machine 1>

The action of movable components of the injection molding machine 1 is described according to a molding procedure. Note that the movable components correspond to elements configured to enable some actions such as movement, rotation or the like. The movable component includes, for example, the screw 32, the metal mold 41, the temperature adjustment mechanism 49, the ejector device 51 and the takeout device 52.

First, the ejector device 51 performs an ejector retraction action to retract the ejector pin. After the ejector retraction action, a mold closing action and a mold clamping action of the metal mold 41 are performed in this order.

After clamping the mold, the injection device 3 performs an injection action, a pressure holding action, a measurement action and a cooling action in this order. In the injection action, the screw 32 advances to cause the molten resin material to be injected into the internal space of the metal mold 41 and filled therein. In the pressure holding action, the screw 32 is continuously pressed in the direction of the nozzle 34 to prevent the resin material from flowing back from the metal mold 41 to the injection device 3 and further applies pressure to the resin material until it solidifies. In the measurement action, the screw 32 is rotated to supply a certain volume of the resin material melted by the heat cylinder 31 to the leading edge of the screw 32. In the cooling action, the temperature adjustment mechanism 49 cools the metal mold 41 and the molded product inside the metal mold 41 for a certain period of time.

After cooling, an action of opening the metal mold 41 is performed. After opening the metal mold, an ejector advancement action is performed of advancing the ejector pin by the ejector device 51 to remove a molded product from the metal mold 41. The removed molded product is taken out from the injection molding machine 1 by the takeout device 52.

In the injection molding machine 1, in addition to the actions of the movable components as described above, an action of the core 47 is performed. The action of the core 47 includes an installation action to install the core 47 in the metal mold 41 and a pulling action to pull the core 47 from the metal mold 41. The action of the core 47 may be performed before, after, or at the same time as the actions of the movable components. During the series of molding processes, the action of the core 47 may be performed several times.

The installation action or the pulling action of one core 47 may be executed once or multiple times. For example, after an installation action and a pulling action of a specific core 47 are performed prior to an ejector retraction process, an installation action and a pulling action of the same specific core 47 may be performed again following the ejector retraction process. In the case where the injection molding machine 1 has multiple cores 47, each core 47 may act independently.

By execution of the above-mentioned series of processes multiple times, molded products are continuously manufactured. Note that the above-mentioned molding process is one example, and the molding method is not limited.

The injection molding machine 1 has an interlock function and is interlocked unless a preset interlock condition is satisfied. If interlocked, an action of the core 47 and actions of the movable components are not performed, and manufacturing of molded products are interrupted. An interlock condition needs to be satisfied in order to release the interlock. The interlock condition for performing an action can be set for each action performed in the injection molding machine 1.

In the case where the user such as an operator or the like sets the interlock conditions concerning the action of the cores 47, it is not easy to appropriately set the interlock condition of the cores 47 and accurately grasp the setting contents. Particularly in the case of the injection molding machine 1 that is composed of multiple elements and implements multiple actions, the interlock conditions are more likely to be complicated and are more difficult to set. Even in the case of the injection molding machine 1 that is composed of one element (e. g., one core) but involves multiple actions during molding, the interlock conditions are more likely to be complicated and are more difficult to set. In the injection molding machine 1 according to the present embodiment, the actions of the cores 47 are presented to the user using icons that makes it easy to visually recognize the information.

### <Overall Configuration of Display Screen 6>

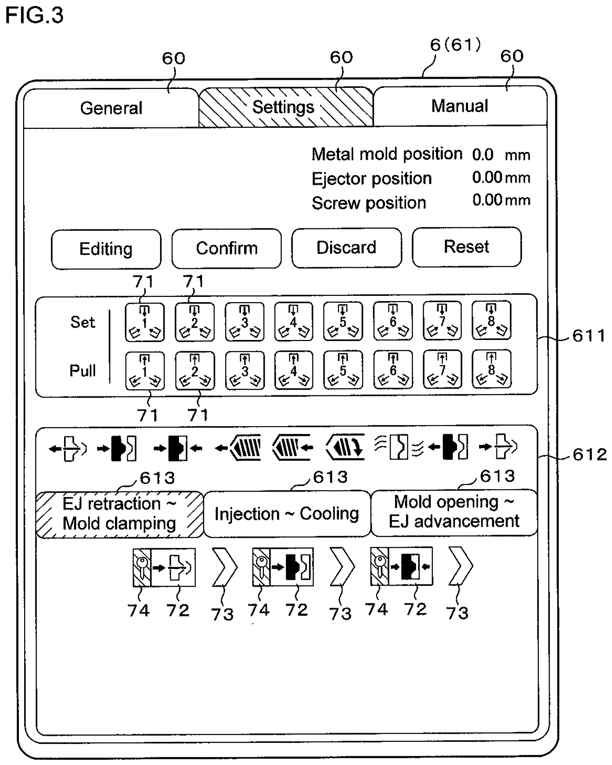

FIG. 3 is a schematic diagram illustrating an example of the display screen 6. The injection molding machine 1 displays an action status of the cores 47, and receives settings of actions, for example, through the display screen 6 displayed on the display unit 24. The display unit 24 displays the display screen 6 according to instructions from the processing unit 21.

The display screen 6 includes a setting screen 61, a general screen 62 and a manual operation screen 63. FIG. 3 illustrates an example of the display screen 6 with the setting screen 61 selected. The state of the injection molding machine 1 in which the setting screen 61 is displayed on the display unit 24 corresponds to a setting mode while the state of the injection molding machine 1 in which the general screen 62 is displayed on the display unit 24 corresponds to a display mode.

In the example in FIG. 3, at the upper part of the display screen 6, three switching tabs 60 labeled "General," "Settings," and "Manual" respectively corresponding to the general screen 62, the setting screen 61 and the manual operation screen 63 are provided. The user can selectively display a desired screen by designating the switching tab 60 corresponding to any one of the screens using the operation unit 25.

### <Settings Screen 61>

The setting screen 61 is a screen for setting the action of the cores 47. The processing unit 21 receives a setting of an action timing of the core 47, the interlock condition and the like through the setting screen 61 from the user. As illustrated in FIG. 3, the setting screen 61 includes a material icon display area 611 and an icon arrangement area 612. The material icon display area 611 corresponds to a first area while the icon arrangement area 612 corresponds to a second area.

The material icon display area 611 is provided with multiple core action icons 71. The core action icon 71 is an icon visually representing the action of the core 47. The action of the core 47 indicated by the core action icon 71 is hereafter also simply described as an action for the core action icon 71.

The core action icon 71 includes information for identifying the core 47 that performs the action for this core action icon 71 and information indicating the contents of the action. In the example illustrated in FIG. 3, the core action icon 71 contains a numeral indicating an identification number assigned to the core 47 that performs the action and an illustration representing the installation action or the pulling action. The type of the actions is identified by the direction of the arrows. If the arrows on the core action icon 71 point to the identification number at the center, the type of the action indicates the installation action, while if the arrows on the core action icon 71 fail to point to the identification number at the center, the type of the action indicates the pulling action. Note that the information used to identify the cores 47 is not limited to the identification number, but may also be an illustration or the like of the core 47.

The core action icons 71 displayed in the material icon display area 611 correspond to the actions of one or more cores 47 to be used for current manufacturing of molded products with the metal mold 41 out of all the cores 47 contained in the injection molding machine 1. The cores 47 to be used are determined in advance through reception of user selection via the general screen 62 that is to be described later. In the present embodiment, the eight cores 47 with identification numbers 1 to 8 are assumed to be used. In the following description, branch numbers are added to the reference codes to differentiate the cores 47 one from another (e. g., core 47-1, core 47-2 and the like), if necessary.

For each of the cores 47-1 to 47-8 selected for use, the processing unit 21 generates core action icons 71 containing the identification number of the core 47 and an illustration corresponding to the installation action or the pulling action. The processing unit 21 classifies the generated core action icons 71 according to the type of the actions and displays the classified ones in the order of the identification numbers of the cores 47 on the material icon display area 611. In FIG. 3, "Set" means an installation action, and "Pull" means a pulling action.

The icon arrangement area 612 is an area where the core action icons 71 displayed in the material icon display area 611 are arranged. By receiving the arrangement of the core action icon 71 from the user through the icon arrangement area 612, the processing unit 21 receives setting of the action timing of the core 47.

In the icon arrangement area 612, multiple molding action icons 72 are displayed in advance. The molding action icons 72 are icons for viewably representing the actions of the movable components of the injection molding machine 1. In the example illustrated in FIG. 3, the molding action icons 72 each contain an illustration representing the action of the movable component.

The actions of the movable components represented by the molding action icon 72 include, for example, ejector retraction, mold closing, mold clamping, injection, pressure holding, measurement, cooling and ejector advancement. The action of the movable component indicated by the molding action icon 72 may hereafter also be described simply as the action for the molding action icon 72.

In the icon arrangement area 612, the molding action icons 72 are arranged according to the order of starting the actions for the molding action icons 72. The molding action icons 72 in the icon arrangement area 612 are aligned in a single row in the left-right direction in the order in which the actions start, for example. Between the molding action icons 72 is a direction icon 73 that indicates the direction of the sequence of the actions. In FIGs 3 to 9, the left side of the drawing indicates the leading end of the order of the actions, while the right side of the drawing indicates the tail end of the order of the actions.

The icon arrangement area 612 has partition tabs 613 to display a series of actions with multiple divided sections, and is configured to display the molding action icons 72 associated with a part of the actions contained in the partition corresponding to the selected partition tab 613.

In FIGs. 3 to 9, the series of actions are displayed in a divided manner such as an action from ejector retraction to mold clamping, an action from injection to cooling and an action from mold opening to ejector advancement. In the icon arrangement area 612 illustrated in FIG. 3, the three molding action icons 72 corresponding to the ejector retraction, mold closing and mold clamping are placed. Above the partition tabs 613, the illustrations corresponding to all the molding action icons 72 are displayed in the order of actions, which makes it possible to grasp the series of actions including the actions of the partition tab 613 that are not being displayed.

The core action icons 71 displayed in the material icon display area 611 are all configured to be arrangeable within the icon arrangement area 612. The user additionally places any one of the core action icons at an arbitrary position within the icon arrangement area 612 by operating the operation unit 25 to thereby set the timing when the action of the core 47 is to be started. The processing unit 21 receives a drag and drop of the core action icon 71 in the material icon display area 611 through the operation unit 25, for example, to thereby receive selection and addition of the core action icon 71.

The placement position of the core action icon 71 in the icon arrangement area 612 indicates the timing when the action indicated by the core action icon 71 starts. In other words, in the icon arrangement area 612, the relative position between each molding action icon 72 and the core action icon 71 determines the timing when each action starts.

In the case where the molding action icon 72 and the core action icon 71 are arranged in series in the left-right direction in the icon arrangement area 612, for example, the start timing is set so that the actions sequentially start according to the arrangement order. If the molding action icon 72 and the core action icon 71 are arranged in parallel in the left-right direction, the start timing is set so that the corresponding actions are started in parallel. "Actions are started in parallel" means that multiple actions are started at the same or approximately the same timing. Note that, in the icon arrangement area 612, multiple core action icons 71 may be placed in series, or multiple core action icons 71 may be placed in parallel.

The user additionally places the core action icon 71 at the left, right of or below a specific molding action icon 72 according to the action timing of the core 47 that is desired to be set. The processing unit 21 recognizes the selected core 47 and the selected type of actions as well as the designated action timing based on the start and end positions of a drag and drop.

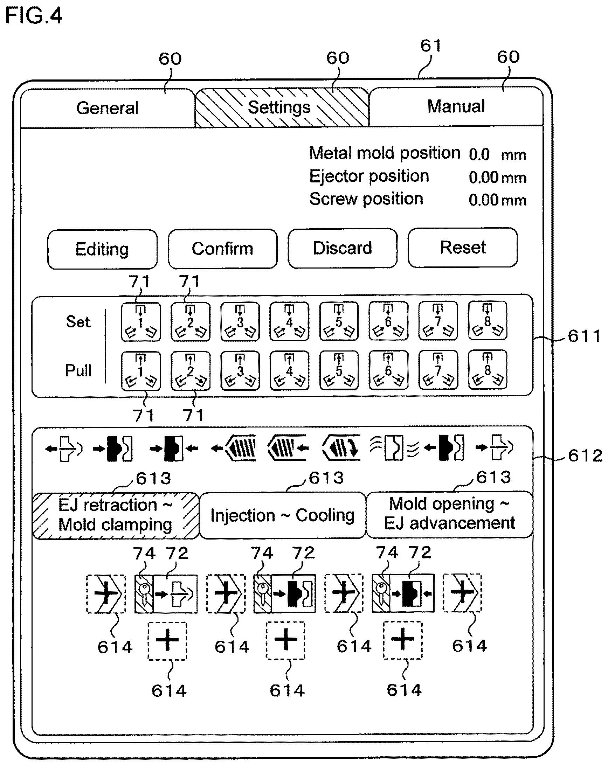

FIG. 4 is a schematic diagram illustrating an example of the setting screen 61 when an operation performed on the core action icon 71 is received. As illustrated in FIG. 4, when receiving an operation performed on the core action icon 71, the processing unit 21 displays a mark image 614, which indicates capability of additional placement, at a position in the icon arrangement area 612 where the core action icon 71 can additionally be placed. The additional placement allowable position can be set in advance, for example, at the left, right of or below the molding action icon 72.

The mark image 614, for example, is a rectangular frame that has approximately the same size as the core action icon 71 and is drawn with a predetermined type of line, for example. The mark image 614 may be displayed in the icon arrangement area 612 when a predetermined operation (e.g., drag) performed on the core action icon 71 in the material icon display area 611 is detected.

When the core action icon 71 is dropped in the icon arrangement area 612, the processing unit 21 arranges the new core action icon 71 in series or in parallel in the left and right directions and updates the placement positions so that the spaces between the icons are adjusted.

The operation method of the core action icon 71 is not limited to a drag and drop, but an appropriate method such as clicking and tapping, for example, may be employed.

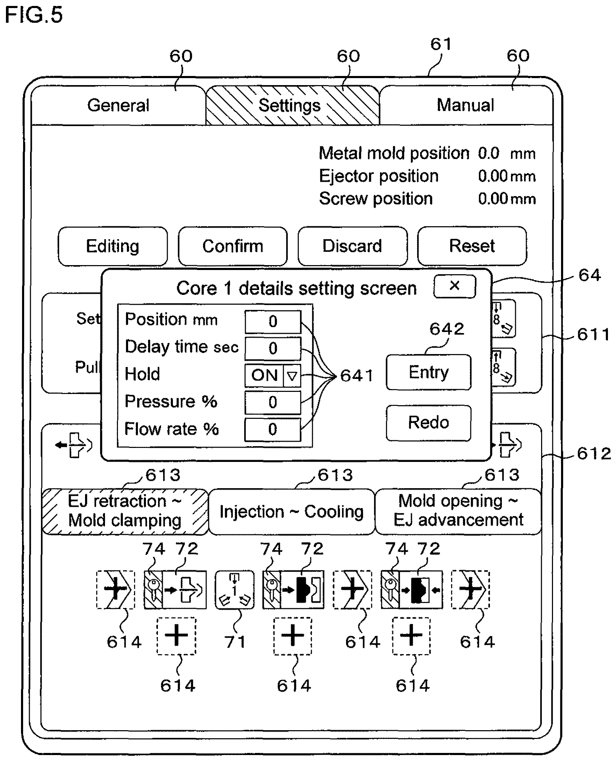

FIG. 5 is a schematic diagram illustrating an example of a details setting screen 64 when detailed setting of an action of the core 47 is received. In the case where the core action icon 71 is additionally placed in the icon arrangement area 612, the processing unit 21 displays, on the display unit 24, the details setting screen 64 for receiving the detailed settings of the action of the core 47. The details setting screen 64 is displayed so as to pop up on the setting screen 61, for example.

The details setting screen 64 is provided with details reception sections 641 that are, for example, composed of pull-down menus, text boxes, check boxes and the like. The processing unit 21 receives detailed settings of the action of the core 47 indicated by the core action icon 71 additionally placed, through the details reception sections 641. The details of the action of the core 47 as setting items include, for example, a stop position, a delay time, ON-OFF of the hydraulic valve, pressure of the hydraulic valve and a flow rate of the hydraulic valve.

The stop position indicates the position where the action of the movable component is stopped and indicates which position the action of the movable component immediately started is to be stopped when the action of the core 47 to be set is started. By setting the stop position to a value other than 0, the action of the movable components can be temporarily stopped at an arbitrary position to allow the core 47 to be set to act. After the action of the core 47 to be set is completed, the action of the movable components is resumed. In the case where the action of the core 47 to be set is started after the completion of the action immediately before, the stop position is designated as 0.

The delay time indicates a time to be delayed in the case where the start of the action of the core 47 is delayed from the action timing defined by the placement position of the core action icon 71. The ON-OFF of the hydraulic valve indicates whether the hydraulic valve is to be turned on or off after the completion of the action of the core 47. The pressure and flow rate of the hydraulic valve indicate the setting values or changed values for variable control when the core 47 acts.

The setting items in the details setting screen 64 may include the type of a confirmation mode and the confirmation time for confirming the contents of the action. By selecting and inputting a desired content in the details reception sections 641 and then designating an entry button 642, the user can set the details of the action of the core 47. After reception of the details of the action of the core 47, the details setting screen 64 is closed.

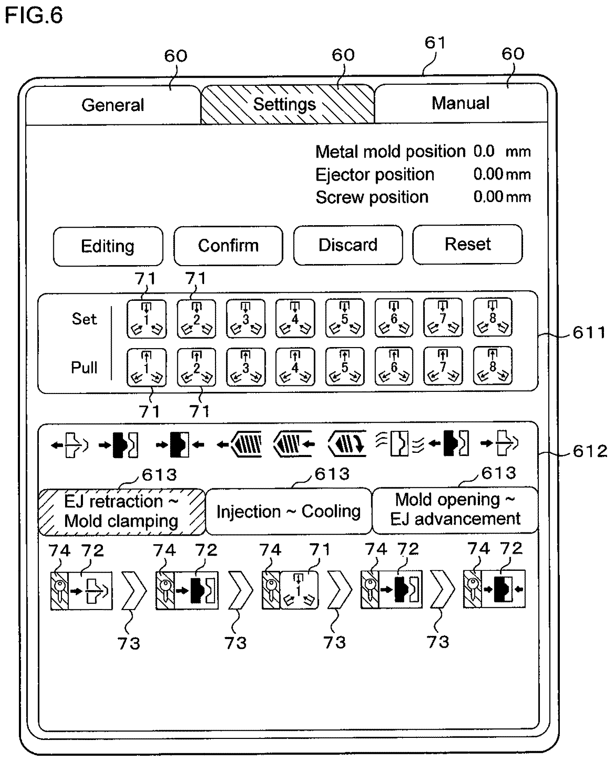

FIG. 6 is a schematic diagram illustrating another example of the setting screen 61. In the icon arrangement area 612 illustrated in FIG. 6, on both sides of the core action icon 71 corresponding to the installation action of the core 47-1 started during the mold closing action, the same molding action icons 72 corresponding to the mold closing action are displayed.

For details of the action of the core 47, in the case where setting to execute the action for the core action icon 71 is received after the action for a specific molding action icon 72 is temporarily stopped, the processing unit 21 additionally places the specific molding action icon 72 corresponding to the action to be temporarily stopped in the icon arrangement area 612. The processing unit 21 determines the arrangement position of the molding action icons 72 and the core action icon 71 such that actions are performed in the order of the action for a specific molding action icon 72, the action for the core action icon 71 and the above-mentioned specific molding action icon 72, and arranges them in the icon arrangement area 612.

As illustrated in FIGs. 3 to 6, the molding action icons 72 and the core action icons 71 displayed in the icon arrangement area 612 are each displayed so as to be associated with an information icon 74. The information icon 74 has a one-to-one correspondence with the molding action icon 72 or the core action icon 71. The information icon 74 is associated with the molding action icon 72 or the core action icon 71, for example, by being placed near the molding action icon 72 or the core action icon 71. In the example illustrated in FIGs. 3 to 6, the corresponding information icon 74 is displayed adjacent to the left of each molding action icon 72 and each core action icon 71.

The information icon 74 is an icon indicating interlock information associated with the corresponding core action icon 71 or molding action icon 72. The information icon 74 contains the illustration of a key, for example, and is displayed in a predetermined background color. The interlock information indicated by the information icon 74 includes information indicating whether or not an interlock condition associated with the corresponding core action icon 71 or molding action icon 72 is satisfied.

The information icon 74 has different background colors depending on whether the interlock condition is satisfied. The processing unit 21 changes the background color of the information icon 74 based on the correspondence between the type of the interlock condition and the color set in advance. FIGs. 3-9 represent different colors with different types of hatching. The display method of the information icon 74 is not particularly limited, and colors other than the background color, illustrations, lighting/flashing or the like may be changed depending on whether the interlock condition is satisfied, for example.

Since, in the present embodiment, the result of determination as to whether the interlock condition is satisfied is not displayed at the stage of displaying the setting screen 61, a background color corresponding to the case not subject to determination for the interlock condition is set to all the information icons 74 contained in the icon arrangement area 612. The background color corresponding to the case not subject to determination for the interlock condition is white, for example. The processing unit 21 may change the background color of the information icons 74 contained in the icon arrangement area 612 depending on whether or not an interlock condition setting operation to be described later has already been received.

When placing in advance the molding action icons 72 in the icon arrangement area 612, the processing unit 21 arranges the information icon 74 adjacent to each of the molding action icons 72. If the core action icon 71 is additionally placed in the icon arrangement area 612, the processing unit 21 places the information icon 74 adjacent to the added core action icon 71.

The setting screen 61 can receive the settings of an interlock condition for the action of the core 47. The interlock condition is a condition for releasing an interlock by an interlock function of the injection molding machine 1. The interlock condition for the action of the core 47 includes individual interlock conditions corresponding to the cores 47-1 to 47-8. The interlock condition for the action of the core 47 may further include an interlock condition for one or more movable components.

The information icon 74 displayed in the icon arrangement area 612 has functions of receiving a setting of the interlock condition to be described later, presenting the set interlock condition, and the like. In the case where the core action icon 71 is added to the icon arrangement area 612, and any one of the information icons 74 in the icon arrangement area 612 is selected by the user operating the user operation unit 25, the processing unit 21 displays an interlock condition setting screen 65 for receiving the setting of the interlock condition on the display unit 24. The interlock condition setting screen 65 is displayed to pop up on the setting screen 61, for example.

The processing unit 21 receives from the user the setting of the interlock condition for the action of the core action icon 71 corresponding to the selected information icon 74 using the interlock condition setting screen 65.

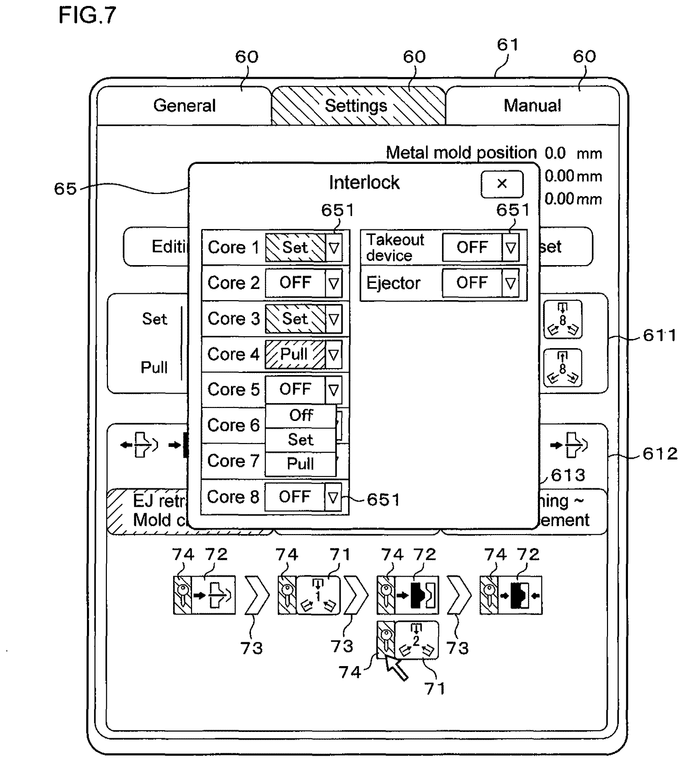

FIG. 7 is a schematic diagram illustrating an example of the interlock condition setting screen 65. The interlock condition setting screen 65 is configured to be able to receive an interlock condition for each target for which an interlock condition is to be set. In the example illustrated in FIG. 7, the targets for which an interlock condition is to be set include the cores 47-1 to 47-8, the ejector device 51 and the takeout device 52. The interlock condition setting screen 65 is provided with multiple condition reception sections 651 in the form of a pull-down menu corresponding to the cores 47-1 to 47-8, the ejector device 51 and the takeout device 52.

The pull-down menu includes "OFF," "Set" and "Pull," for example. If the interlock condition is "OFF," there is no condition to be satisfied by the target to be set, and the interlock is released in any state. If the interlock condition is "Set," the target to be set is required to be set. Being set may include, for example, the installation action of the core 47 having been completed, and the ejector advancement action having been completed, for example. If the interlock condition is "Pull," the target to be set is required to be pulled. Being pulled may include, for example, the pulling action of the core 47 having been completed, and the ejector retraction action having been completed, for example.

The user can set the interlock condition for each target to be set by selecting a desired content in each of the condition reception sections 651. The processing unit 21 may change the display manner of the condition reception sections 651 depending on the type of the set interlock condition. The processing unit 21 performs image processing of changing the background color of the condition reception section 651 for which either "Set" or "Pull" is selected, for example, to a specific color. The configuration described above makes it possible to easily grasp the setting state at a glance. After reception of the interlock condition for each of the targets to be set, the interlock condition setting screen 65 is closed.

Details of the action of the core 47 and the interlock condition are set for each of the actions of the core action icons 71 arranged in the icon arrangement area 612. Each time the processing unit 21 receives settings, it stores, in the storage unit 22, identification information of the received action, identification number of the core 47 corresponding to the action, a type of the action, a timing of the action, details of the action, an interlock condition and the like in association with each other.

The interlock condition can be set for the actions other than the actions of the cores 47, such as the actions of the molding action icons, various actions performed by the injection molding machine 1 or the like. The interlock condition for the actions other than the actions of the cores 47 may be set in advance through an interlock management screen provided separately from the display screen 6, or may be set in advance according to the specification of the injection molding machine 1, for example.

The interlock condition for the actions other than the actions of the cores 47 may be set with the interlock condition setting screen 65 provided through the information icon 74 that is associated with the molding action icon 72. The setting items contained in the interlock condition setting screen 65 can appropriately be changed depending on the type of the action as a target that receives an interlock condition.

The setting screen 61 may be provided with an editing button designated when setting of the action for the core 47 is started, a confirm button for confirming the set content, a discard button designated when the content that is being set is discarded, a reset button designated when the set content is reset and the like.

### <General Screen 62>

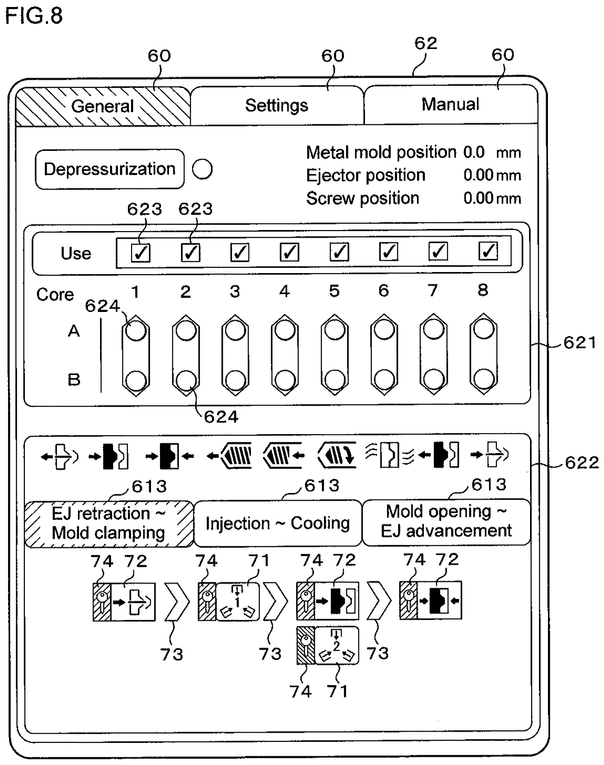

FIG. 8 is a schematic diagram illustrating an example of the general screen 62. The general screen 62 is a screen that displays the set action statuses for the cores 47 and the movable components. The general screen 62 contains a core information display area 621 and an action status display area 622.

The core information display area 621 is an area for displaying the states of the cores 47 provided in the injection molding machine 1. At the center of the core information display area 621, identification numbers 1-8 are displayed for identifying the cores 47-1 to 47-8 provided in the injection molding machine 1.

Above the identification numbers, multiple checkboxes 623 associated with the cores 47-1 to 47-8 identified by the identification numbers are provided. The checkboxes 623 each function as a selection reception section for the core 47 as a target to be used for the current molding work. The user places a checkmark in the checkbox 623 for the core 47 to be used by operating the operation unit 25 to thereby make the desired core 47 available. The processing unit 21 recognizes the core 47 corresponding to the marked checkbox 623 as a target to be used.

Below the identification numbers, the current action states are displayed for the cores 47-1 to 47-8 identified by the identification numbers. The action state includes information indicative of whether the core is in action or not and the content of the action if in action. In the example illustrated in FIG. 8, the content of the action is indicated by a port name "A" and "B" of the hydraulic valve in the case where the installation action and the pulling action are executed.

While the injection molding machine 1 is in operation, the processing unit 21 specifies the action states of the cores 47-1 to 47-8 based on the operation logs of the injection molding machine 1 or the detection values by the sensors, and identifiably displays the specified action states in the core information display area 621. In the case where the installation action is being implemented for the core 47-1, for example, a circular icon 624 located on the "A" side corresponding to the installation action is lit in a preset color.

On the general screen 62, the action states of the movable components other than the core 47 obtained through the injection molding machine 1 may also be displayed including the position of the metal mold 41, the position of the ejector device 51, the position of the screw 32, and execution or inexecution of depressurization, for example.

The action status display area 622 is an area for displaying the action statuses of the cores 47 and the movable components. The action status display area 622 displays the contents of the action of the injection molding machine 1 including the action of the cores 47 set through the setting screen 61. Since the configuration of the action status display area 622 is almost the same as that of the icon arrangement area 612, the difference from the icon arrangement area 612 will mainly be described in details below.

The action status display area 622 contains the core action icons 71 and the molding action icons 72 that are arranged according to the order of actions. The arrangement of the core action icons 71 and the molding action icons 72 in the action status display area 622 changes in conjunction with the operation performed on the icon arrangement area 612. If receiving addition, deletion or the like of the core action icon 71 through the icon arrangement area 612, the processing unit 21 also performs addition or deletion of the core action icon 71 in the action status display area 622.

The core action icons 71 and the molding action icons 72 in the action status display area 622 are each associated with the information icon 74. The information icons 74 in the action status display area 622 are displayed in different background colors depending on whether the interlock condition is satisfied.

The processing unit 21 determines whether or not the interlock condition is satisfied for each action of the core 47 based on the interlock condition for the action of each core 47 obtained through the interlock condition setting screen 65 and the action timing of each action based on the arrangement of the icon arrangement area 612.

For the actions of the core 47 to be determined, if all of the multiple interlock conditions set for each target to be set are satisfied, the interlock condition is determined to be satisfied. If at least one of the multiple interlock conditions is not satisfied, the interlock condition is determined not to be satisfied.

The processing unit 21 decides the background color of the information icon 74 corresponding to the action of the core 47 to be determined depending on the determination result and displays the information icon 74 of the decided background color at a suitable position of the action status display area 622. For example, the background color in the case where the interlock condition is satisfied is blue, while the background color in the case where the interlock condition is not satisfied is red.

FIG. 8 demonstrates that the interlock condition for the installation action of the core 47-1 is satisfied, while the interlock condition for the installation action of the core 47-2 is not satisfied.

The information icon 74 in the action status display area 622 is configured to be able to display the details of whether the interlock condition is satisfied. The user can display an interlock details screen 66 depicting the details of whether an interlock condition for a desired action is satisfied by designating any one of the information icons 74 via the operation unit 25. The interlock details screen 66 is displayed so as to pop up on the general screen 62, for example.

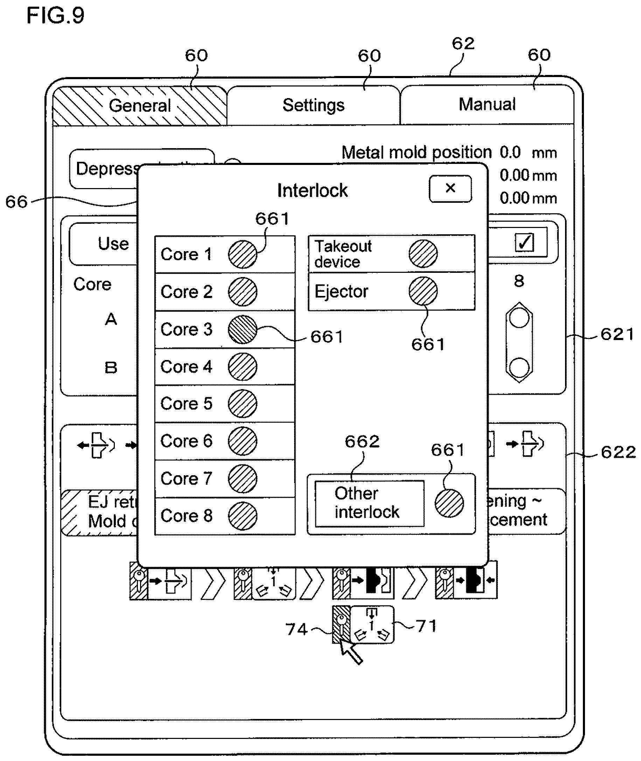

FIG. 9 is a schematic diagram illustrating an example of the interlock details screen 66. The interlock details screen 66 displays the status as to whether the interlock condition is satisfied for each target for which the interlock condition is to be set. The status as to whether the interlock condition is satisfied is represented by using a circular icon 661 varying in color depending on whether the interlock condition is satisfied, for example. The display color of the circular icon 661 depending on whether the interlock condition is satisfied may employ the same color as the background color of the information icon 74 depending on whether the interlock condition is satisfied.

As an example, it is assumed that the installation action of the core 47-3 is started after the installation action of the core 47-2 as an order of actions, and that the interlock condition for the core 47-3 is set to "Set" as the interlock condition relative to the installation action of the core 47-2.

Here, the processing unit 21 determines that the interlock condition for the core 47-3 is not satisfied among the interlock conditions for the action of the core 47-2. The processing unit 21 displays the circular icon 661 corresponding to the core 47-3 in the interlock details screen 66 with a display color (e.g., red) corresponding to "not satisfied" and displays the other circular icons 661 corresponding to ones determined to satisfy the interlock condition with the display color (e.g., blue) corresponding to "satisfied."

In the case where an interlock condition for an action other than the action of the cores 47 is set as an interlock condition for the injection molding machine 1, the interlock details screen 66 may display a status as to whether an interlock condition for the action other than the action of the cores 47 is satisfied. In the example of the interlock details screen 66 illustrated in FIG. 9, the circular icon 661 located on the button 662 referring to "other interlock" displays whether the interlock condition for the operation other than the action of the cores 47 is satisfied.

The details of the other interlock conditions, that is, whether an individual interlock condition item is satisfied, can be confirmed through another interlock details screen that is displayed by selection of the button 662, for example. The interlock details screen 66 displayed via the information icon 74 that is associated with the molding action icon 72 may contain only the information related to the other interlock conditions.

In the case where the action of the core 47 for which the interlock condition is not satisfied is confirmed on the general screen 62, the user can modify the setting of the action of the core 47 using the setting screen 61. For example, after receiving the setting of the action of the core 47 through the setting screen 61 and displaying the action status of the core 47 for which the setting is received on the general screen 62, the processing unit 21 receives the setting of the action of the core 47 through the setting screen 61 again and displays the action status of the core 47 for which the setting has been received on the general screen 62. The series of processing is repeated until the interlock condition for actions of all the cores 47 are finally satisfied.

Note that the icon arrangement area 612 and the action status display area 622 may be configured to make a display range changeable by swiping, scrolling or the like. This allows the user to confirm the core action icon 71 or the molding action icon 72 corresponding to the action placed upstream or downstream from the current display range even if the core action icons 71 and the molding action icons 72 are too many to be displayed in a single row within the range.

As a display method of the core action icons 71 and the molding action icons 72 in the icon arrangement area 612 and the action status display area 622, an appropriate display method of visually representing the order of the actions can be used. The core action icons 71 and the molding action icons 72 may be displayed in a single vertical column or across multiple columns, for example. The core action icons 71 and the molding action icons 72 may be displayed to fold back at the right end of the second area toward the left end, not limited to be placed in one direction.

The control device 2 outputs control signals for executing the actions according to the set order of actions to the components, to operate the injection molding machine 1.

### <Manual Operation Screen 63>

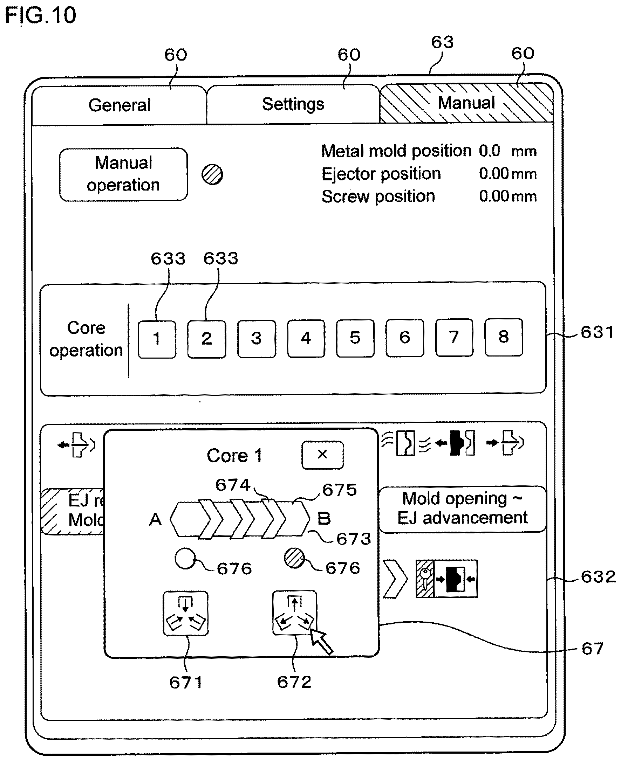

FIG. 10 is a schematic diagram illustrating an example of a manual operation screen 63. The manual operation screen 63 is a screen for manually operating the cores 47. The user can manually operate the cores 47 using the manual operation screen 63.

The manual operation screen 63 is provided with an operation button display area 631 containing an operation button 633 for manually operating each core 47 and an action status display area 632 as in the general screen 62.

The operation button display area 631 is provided with multiple operation buttons 633 corresponding to the cores 47 provided in the injection molding machine 1. If the operation button 633 is selected, an operation reception screen 67 for accepting a manual operation is displayed on the display unit 24. The operation reception screen 67 is displayed so as to pop up on the manual operation screen 63, for example.

The operation reception screen 67 contains an installation operation button 671 for accepting an installation action of the core 47, a pulling operation button 672 for accepting a pulling action of the core 47 and a flow path display section 673 for visually representing a flow of the oil in the hydraulic valve.

By selecting the installation operation button 671 or the pulling operation button 672, the user can manually perform an installation action or a pulling action during selecting.

In the case where the installation action or the pulling action by the manual operation is implemented, the processing unit 21 displays the direction of the flow of oil corresponding to the content of the action in the flow path display section 673. The processing unit 21 displays a flow path direction icon 674 directed in the direction of the flow of the oil on a flow path bar 675 in a superposed manner and turns on a light of a flow path icon 676 placed on the port corresponding to the hydraulic valve side corresponding to the flow path, for example.

### <Processing Procedure >

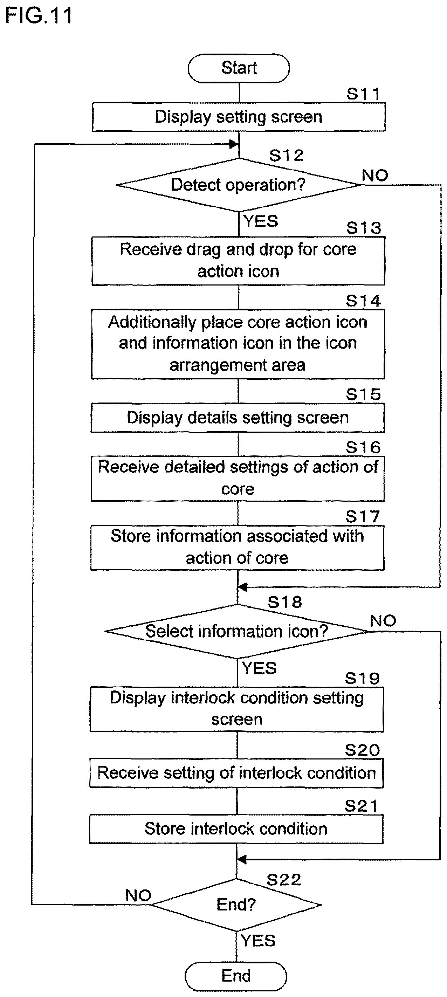

FIG. 11 is a flowchart illustrating one example of a processing procedure related to the setting screen 61. The processing in each of the following flowcharts is executed by the processing unit 21 according to the program 2P stored in the storage unit 22 of the control device 2. For example, when by selecting execution of the program 2P, the setting screen 61 is selected on the display screen 6 displayed on the display unit 24, the following processing is started.

The processing unit 21 of the control device 2 displays the setting screen 61 on the display unit 24 (step S11). The setting screen 61 is provided with the material icon display area 611 containing the multiple core action icons 71 and the icon arrangement area 612 containing the multiple molding action icons 72 arranged according to the order of actions and the information icons 74.

The processing unit 21 determines whether or not an operation performed on any one of the core action icons 71 in the material icon display area 611 is detected through the operation unit 25 (step S12). If determining that an operation is not detected (S12: NO), the processing unit 21 advances the processing to step S18.

If determining that an operation is detected (S12: YES), the processing unit 21 receives a drag and drop for the core action icon 71 in the material icon display area 611 (step S13). The processing unit 21 additionally places the operated core action icon 71 in the icon arrangement area 612 and additionally places the information icon 74 with a predetermined background color to the left of the core action icon 71 (step S14). In response to the detection of the operation on the core action icon 71, the processing unit 21 may display the mark images 614 at the positions in the icon arrangement area 612 where the core action icon 71 can be additionally placed.

The processing unit 21 displays the details setting screen 64 for receiving the detailed setting of the action of the core 47 on the display unit 24 (step S15). The processing unit 21 receives the detailed settings of the action of the core 47 through the details setting screen 64 (step S16).

The processing unit 21 stores information on the set action of the core 47 in the storage unit 22 (step S17). For example, the storage unit 22 stores the identification information of the action, the identification number of the core, the type of the action, the timing of starting the action and the details of the action in association with each other.

The processing unit 21 determines whether or not selection of any one of the information icons 74 in the icon arrangement area 612 is received (step S18). If determining that selection of the information icon 74 is not received based on not receiving an operation from the user through the operation unit 25 (S18: NO), the processing unit 21 advances the processing to step S22.

If determining that selection of the information icon 74 is received based on receiving an operation from the user through the operation unit 25 (S18: YES), the processing unit 21 displays the interlock condition setting screen 65 on the display unit 24 (step S19). The processing unit 21 receives setting of the interlock condition for the action of the core 47 corresponding to the selected information icon 74 through the interlock condition setting screen 65 (step S20). The interlock condition to be set includes an interlock condition for each of the cores 47 and an interlock condition for the movable components.

The processing unit 21 stores, in the storage unit 22, the set interlock condition in association with the action identification information of the core 47 for which interlock condition is to be set (step S21).

The processing unit 21 determines whether or not the processing is to be ended (step S22). If determining that the processing is not to be ended based on not receiving ending on the display screen 6 or switching of the switching tab 60 (S22: NO), for example, the processing unit 21 returns the processing to step S12 to repeatedly execute the reception of the action of another core 47 and the interlock condition. If determining that the processing is to be ended by receiving ending on the display screen 6 or switching of the switching tab 60 (S22: YES), for example, the processing unit 21 ends the processing.

The processing unit 21 may store, in the storage unit 22, the set information on the action of each core 47 and the set information on the interlock condition in association with the identification information of a molded product or identification information of the metal mold 41. The processing unit 21 can present the information read from the storage unit 22 on the setting screen 61 as a setting history.

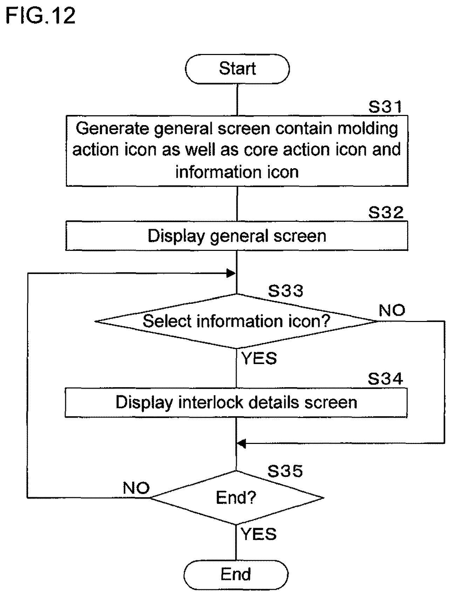

FIG. 12 is a flowchart illustrating one example of a processing procedure related to the general screen 62. In the case where the general screen 62 is selected on the display screen 6 displayed on the display unit 24, for example, the processing unit 21 of the control device 2 starts the processing as described below.

The processing unit 21 generates the general screen 62 having the action status display area 622 that contains the multiple molding action icons 72 arranged in the order of actions as well as the multiple core action icons 71 and the multiple information icons 74 (step S31). Each information icon 74 is associated with any one of the molding action icons 72 or any one of the core action icons 71 and is displayed in a background color depending on whether the interlock condition is satisfied for the action of the corresponding molding action icon 72 or the action for the core action icon 71.

The processing unit 21 arranges, according to the order of actions, the multiple molding action icons 72 and the core action icons 71 corresponding to the series of actions in the action status display area 622 based on the information stored in the storage unit 22.

The processing unit 21 determines whether or not the interlock condition for the action of each core 47 is satisfied based on the information stored in the storage unit 22 and generates the information icon 74 with the background color corresponding to the determination result. The processing unit 21 places each of the generated information icon 74 to the left of the core action icon 71 indicating the action of the core 47 to be determined. Similarly, the processing unit 21 determines whether or not the interlock condition for the action of each movable component is satisfied and places the information icon 74 with the background color corresponding to the determination result to the left of the molding action icon 72 indicating the action of the corresponding movable component.

The general screen 62 also has the core information display area 621 for displaying the status of the cores 47. In the case where the injection molding machine 1 is in operation, the processing unit 21 updates the action status of each of the cores 47 in the core information display area 621 as needed according to the operating state of the injection molding machine 1.

The processing unit 21 displays the general screen 62 containing the generated action status display area 622 and the core information display area 621 on the display unit 24 (step S32).

The processing unit 21 determines whether or not selection of any one of the information icons 74 in the action status display area 622 is received (step S33). If determining that selection of the information icon 74 is not received by not receiving an operation from the user through the operation unit 25 (S33: NO), the processing unit 21 advances the processing to step S35.

If determining that selection of the information icon 74 is received by receiving an operation from the user through the operation unit 25 (S33: YES), the processing unit 21 displays the interlock details screen 66 on the display unit 24 (step S34). The interlock details screen 66 displays the details of whether an interlock condition for the action of the core 47 corresponding to the selected information icon 74 or an interlock condition for the action of the movable component is satisfied. The processing unit 21 generates and displays the interlock details screen 66 for displaying the status as to whether the interlock condition is satisfied for each target for which the interlock condition is to be set.

The processing unit 21 determines whether or not the processing is to be ended (step S35). If determining that the processing is not to be ended by not receiving ending on the display screen 6 or switching of the switching tab 60 (S35: NO), for example, the processing unit 21 returns the processing to step S33. If determining that the processing is to be ended by receiving ending on the display screen 6 or switching of the switching tab 60 (S35: YES), for example, the processing unit 21 ends the processing.

According to the present embodiment, the interlock information is presented by the information icon 74 that makes the information viewable at a glance, which allows the user to easily grasp the interlock information related to the core 47. Associating the information icon 74 with the core action icon 71 and the molding action icon 72 makes it possible to easily grasp the correspondence between the content of an action and the interlock information for the action and to grasp the interlock information for the core 47 according to the sequence of the actions.

Displaying the core action icons 71 and the molding action icons 72 side-by-side in the order of actions makes it possible to visually confirm the order of the actions for multiple cores 47 set by the user, which makes it easy to grasp the actions of the set cores 47. Even in the case where multiple cores 47 are present, the core action icons 71 arranged in the order of actions allow the user to easily grasp the order of actions for each of the cores 47.

Varying the display manner of the information icons 74 depending on whether the interlock condition is satisfied allows the user to intuitively grasp whether the interlock condition is satisfied. Presenting whether an interlock condition is satisfied for each of the multiple cores 47 provided in the injection molding machine 1 via the information icon 74 allows the user to easily set and more accurately grasp the actions of the cores 47.

The display screen 6 is provided with the setting screen 61 and the general screen 62, which enables smooth setting of the action of the core 47 and smooth confirmation of the set action, which improves convenience. Placement of the core action icon 71 at a predetermined position allows setting of an action timing for the core 47, which makes it possible for the user to visually grasp the setting contents with ease. The core action icon 71 can be placed by a drag and drop, which makes it possible to set the action timing with more easy operation. Displaying mark images at positions where the core action icon 71 can additionally be placed allows the user to clearly recognize the candidate locations of the core action icon 71, which improves operability.

The embodiments disclosed herein are illustrative in all respects, and should be considered not to be restrictive. Technical characteristics described in the respective embodiments can be combined with each other, and the scope of the invention is intended to include all modifications within a scope of the appended claims and a scope equivalent to the scope of the appended claims.

The sequence shown in each embodiment is not limited, and to the extent that there is no conflict, each processing procedure may be performed in a different order, or multiple processing may be performed in parallel. The processing entity of each processing is not limited, and the processing of each device may be executed by another device within the scope of consistency.

The matters described in each embodiment can be combined with each other. Moreover, independent claims and dependent claims stated in the scope of claims can be combined with each other in any combination, regardless of dependency. In addition, the scope of claims uses the form of describing claims that depend on two or more other claims (multi-claim format), though not limited to this format. The scope of claims uses the form of describing multiple claims that depend from at least one multiple claims (multi-multi claims).

## Claims

1. An injection molding machine, comprising:
an injection device (3) melting and injecting an injection material;
a mold clamping device (4) clamping a metal mold (41) with a core (47) that is injected with the injection material;
a control device (2) controlling an action of the core (47); and
a display unit (24) displaying an action status of the core (47), wherein
the display unit (24) includes
a core action icon (71) indicative of an action of the core (47), and
a first information icon (74) indicative of interlock information concerning the core (47), wherein
the core action icon (71) and the first information icon (74) are displayed in association with each other.

2. The injection molding machine according to claim 1, further comprising a movable component, wherein
the display unit (24) further comprises a molding action icon (72) indicative of an action of the movable component, wherein
the molding action icon (72) and a second information icon (74) indicative of interlock information concerning the molding action icon are displayed in association with each other.

3. The injection molding machine according to claim 2, wherein
the core action icon (71) as well as the first information icon (74) and the molding action icon (72) as well as the second information icon (74) are arranged according to timings of actions of the core (47) and the movable component, and
a display manner of the information icon (74) varies depending on whether an interlock condition is satisfied for an action of the core (47) indicated by the core action icon (71) or an action of the movable component indicated by the molding action icon (72).

4. The injection molding machine according to claim 1 or 2, wherein the interlock information includes information indicating whether or not interlock conditions for a plurality of the cores (47) in the mold clamping device (4) are satisfied.

5. The injection molding machine according to claim 1 or 2, wherein the display unit (24) displays a screen indicating whether or not interlock conditions for a plurality of the cores (47) in the mold clamping device (4) are satisfied in a case where the information icon (74) is operated.

6. The injection molding machine according to claim 1 or 2, further comprising a display mode for displaying a status as to whether an interlock condition is satisfied and a setting mode for receiving a setting of an interlock condition, wherein
the display unit (24) displays a screen indicating whether or not interlock conditions for a plurality of the cores (47) in the mold clamping device (4) are satisfied in a case where the information icon (74) is operated in the display mode, and displays a screen for receiving a setting of an interlock condition when the information icon (74) is operated in the setting mode.

7. The injection molding machine according to claim 2, wherein
the display unit (24) comprises a first area (611) including a plurality of the core action icons (71) corresponding to actions of a plurality of the cores (47) and a second area (612) including a plurality of the molding action icons (72) arranged according to an order of actions, and
by operating the core action icon (71) in the first area (611), the core action icon (71) is added to the second area (612).

8. The injection molding machine according to claim 7, wherein the display unit (24) displays a mark image (614) indicating a position in the second area (612) capable of additionally placing the core action icon (71).

9. The injection molding machine according to claim 7, wherein the display unit (24) displays a screen for accepting a detailed setting of an action of the core (47) indicated by the core action icon (71) in a case where the core action icon (71) is added to the second area (612).

10. An information processing method according to an injection molding machine (1),
wherein the injection molding machine (1) comprises:
an injection device (3) melting and injecting an injection material;
a mold clamping device (4) clamping a metal mold (41) with a core (47) that is injected with the injection material; and
a display unit (24) displaying an action status of the core (47), and
the method comprising
displaying, on the display unit (24), a core action icon (71) indicative of an action of the core (47) and a first information icon (74) indicative of interlock information concerning the core (47) in association with each other.

11. The information processing method according to claim 10, further comprising:
displaying a molding action icon (72) indicative of an action of a movable component of the injection molding machine (1) and a second information icon (74) indicative of interlock information concerning the molding action icon (72) in association with each other.

12. The information processing method according to claim 11, further comprising:
displaying the core action icon (71) as well as the first information icon (74) and the molding action icon (72) as well as the second information icon (74) according to an action timing of the core (47) and the movable component side by side; and
varying a display manner of the information icon (74) depending on whether an interlock condition is satisfied for an action of the core (47) indicated by the core action icon (71) or an action of the movable component indicated by the molding action icon (72).

13. The information processing method according to claim 10 or 11, wherein the interlock information includes information indicative of whether or not interlock conditions for a plurality of the cores (47) in the mold clamping device (4) are satisfied.

14. The information processing method according to claim 10 or 11, further comprising displaying a screen indicating whether or not interlock conditions for a plurality of the cores(47) in the mold clamping device (4) are satisfied in a case where an operation on the information icon (74) is received.

15. The information processing method according to claim 10 or 11,
wherein the injection molding machine (1) further comprises a display mode for displaying a status as to whether an interlock condition is satisfied and a setting mode for receiving a setting of an interlock condition, and
the method further comprising:
displaying a screen indicating whether or not interlock conditions for a plurality of the cores (47) in the mold clamping device (4) are satisfied in a case where an operation on the information icon (74) is received in the display mode; and
displaying a screen for receiving a setting of an interlock condition in a case where an operation on the information icon (74) is received in the setting mode.

16. The information processing method according to claim 11,
wherein the display unit (24) further comprises a first area (611) including a plurality of the core action icons (71) corresponding to actions of a plurality of the cores (47) and a second area (612) including a plurality of the molding action icons (72) arranged according to an order of actions,
the method further comprising:
receiving an operation on the core action icon (71) in the first area (611); and
adding the core action icon (71) to the second area (612) in response to the received operation.

17. The information processing method according to claim 16, further comprising displaying a mark image (614) indicating a position capable of additionally placing the core action icon (71) in the second area (612).

18. The information processing method according to claim 16, further comprising:
displaying a screen for receiving a detailed setting of an action of the core (47) indicated by the added core action icon (71); and
receiving a detailed setting of the action of the core (47) through the displayed screen.

19. The information processing method according to claim 18, further comprising adding the molding action icon (72) corresponding to a specific movable component at a position corresponding to an action next to the added core action icon (71) in the second area (612) in the case where the received detailed setting of the core (47) satisfies a specific requirement.

20. A computer program causing a computer (2) to execute processing related to an injection molding machine (1),
the injection molding machine (1) comprising:
an injection device (3) melting and injecting an injection material;
a mold clamping device(4) clamping a metal mold (41) with a core (47) that is injected with the injection material; and
a display unit (24) displaying an action status of the core (47),
the computer program causing the computer (2) to execute processing of displaying, on the display unit (24), a core action icon (71) indicative of an action of the core (47) and a first information icon (74) indicative of interlock information concerning the core (47) in association with each other.

21. The computer program according to claim 20 causing the computer (2) to execute processing of displaying a molding action icon (72) indicative of an action of a movable component of the injection molding machine (1) and a second information icon (74) indicative of interlock information concerning the molding action icon in association with each other.

22. The computer program according to claim 21 causing the computer (2) to execute processing of:
displaying the core action icon (71) as well as the first information icon (74) and the molding action icon (72) as well as the second information icon (74) according to an action timing of the core and the movable component side by side, and
varying a display manner of the information icon (74) depending on whether an interlock condition is satisfied for an action of the core (47) indicated by the core action icon (71) or an action of the movable component indicated by the molding action icon (72).
